(19)

**Europäisches Patentamt**

**European Patent Office**

**Office européen des brevets**

(11) **EP 2 189 428 A2**

(12) **EUROPEAN PATENT APPLICATION**

(43) Date of publication:
**26.05.2010 Bulletin 2010/21**

(51) Int Cl.:
***C04B 28/02*** *(2006.01)*

(21) Application number: **09382259.1**

(22) Date of filing: **24.11.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **25.11.2008 ES 200803349**

(71) Applicant: **Entorno y Vegetación, S.A.
28002 Madrid (ES)**

(72) Inventor: **Burgos Enriquez, Enrique
28002, MADRID (ES)**

(74) Representative: **Urizar Anasagasti, Jesus Maria
IPAMARK, S.L.
Paseo de la Castellana 72 1°
28046 Madrid (ES)**

(54) **Hydraulic binder and manufacturing method.**

(57)    The invention relates to a hydraulic binder, comprising: pure Portland clinker, gypsum, sodocalcic glass, color mixed glass, or transparent sodocalcic glass and optionally alumina for increasing the initial strengths of the compound, for the purpose of forming a high-performance, low-cost, sustainable hydraulic cement.

EP 2 189 428 A2

Printed by Jouve, 75001 PARIS (FR)

**Description**

Object of the Invention

The purpose of the hydraulic binder of the invention and the manufacturing method proposed is to substitute Portland cement in a reasonable percentage as well as the drawbacks thereof, both those relating to the sustainability, decrease of $CO_2$, and the cost thereof and searching for application properties in a simpler and more cost-effective manner than the drawbacks of Portland cement, those relating to the price and especially in white Portland cement, without dismissing the decrease of the cost in gray Portland cement.

Background of the Invention

It is known that the most used cement worldwide is Portland cement, it is also known that this cement contributes considerably to the increase of $CO_2$ in the atmosphere and therefore does not contribute to sustainability, but it is also the basis of growth and the backbone of construction. The continuous search for binders or binding materials is constant in the field of construction, one of its premises is the intrinsic quality of these new products, sustainability, and the marketing price.

However, a more cost-effective product (binder) is achieved by means of this inventive method, without prior investment, i.e., using a ball mill dedicated to cement and to the actual storage and distribution structure, since it uses domestic used glass or industrial sheet glass mixed in different proportions, the source of this material not being a determining factor, although it is more advisable to use glass from recycling or from glass wastes, generated both by the recycling industry and the glass industry and which, worldwide, would be a considerable volume the use of either wastes which cannot be used, or from other sources, it incorporates into the binder a zero-polluting sustainable element which is present in nature and can substitute up to 80% of traditional Portland cement, equaling its properties in many cases and improving them in others, but always with a considerable decrease in $CO_2$ in the atmosphere.

This new binder is applicable in all the fields of civil engineering, and although the initial strength is lower than in Portland cement, the same results are obtained with primary additions.

Description of the Invention

By means of a mechanical alloying of non-metal elements, a search has been conducted in a dry ball mill for the properties derived from the grinding process which involves the repeated fracture, deformation and welding, where appropriate, of the minerals involved, as well as the high homogenization, and intimate mixture of the components of this aggregate.

This aggregate is basically formed by white or gray Portland clinker, domestic or industrial glass, mixture of glasses or selection of transparent glass and alumina in small proportions, to increase the initial strength. A carefully calculated amount of plaster stone ($CaSO_4.2H_2O$) or burnt gypsum ($CaSO4.\frac{1}{2}H_2O$) as a retardant of the percentage proportion of the Portland clinker present in the mixture, in order for the properties of this alloyed aggregate to be noteworthy, the applied energy must be such that the resulting product is comprised between 0.1 um and at most 28 $\mu$ (microns), 50th percentile, the efficient optimum being about 12 u-18 u, p50. Although the greatest effects occur between 0.1-10 $\mu$., p50, it has not been possible to reduce this size of 0.1 $\mu$. without introducing considerable contaminating amounts from the grinding equipment, this grinding must be continuously checked to reach the established grain size grade, although once the latter has been established in the digital control of the mill, the powder compound returns again to the mill by means of the dynamic separator until achieving the established grain size parameter, this powder passing in a hot condition, due to the energy of the grinding, already valuated, to the storage silos.

The intimate and homogeneous mixture of these mechanically alloyed elements offers a series of superlative properties since it is known that the smaller size of the particles in the microstructurally homogeneous and intimate mixture generated considerably and exponentially increases the reactivity of the mixture and therefore its mechanical properties. To prove these properties, it will be compared in some cases with a mixture of the non-alloyed components and in other cases with properties of Portland cement.

Different proportions of the components have been used in the different tests and analyses conducted, in order to thus achieve different properties and applications in this novel method.

Thus, both glass and clinker have been used, both of them as basic components in proportions with 5% ranges and complementary to one another, such that the percentage decrease of the mixture of one of them entails the increase of the other one in the same proportion and both the gypsum and the alumina are determined over the percentage of clinker present in the mixture.

The analysis of the results leads to a maximum of glass present of the order of between 75-85% and to a maximum of clinker likewise of the order of 75-98%, always with its complement of clinker in the first case of about 25-20% and of glass in the second case of the order of 2-25%

By way of example

| Glass | 20 | 25 | 30 | 35 | 40 | 45 | 40 | 35 | 50 | 55 | 60 | 65 | 70 | 75 | 80 |
|---|---|---|---|---|---|---|---|---|---|---|---|---|---|---|---|
| Clinker | 80 | 75 | 70 | 65 | 60 | 65 | 60 | 55 | 50 | 45 | 40 | 35 | 30 | 25 | 20 |

This resulting mechanical alloy, in all the proportions, reacts with water, always forming a cement with different features according to the percentages of the components, applicable to civil engineering and to architecture, with considerable technical and economic advantages.

Two phases will be distinguished in these mixtures:

The first phase, in which the addition of glass to the mill reaches 49% and therefore it could be considered that this glass is an addition to the clinker.

The second phase, in which the glass ranges from 49 to 90%, in which it can be considered that the clinker is an addition to the glass, therefore this portion of resulting cements could be called "Glass Cements".

General Properties

The activity of the glass and alloyed with clinker and gypsum in general terms has a highly considerable effect on the decrease of the heat of hydration, due to the fact that it has a smaller percentage of the compounds responsible for raising the temperature while the cement sets, which involves a lower formation of capillary spaces and therefore a higher density and compactness, this decrease of heat of hydration depends to a great extent on the percentage of the glass in the mixture, this intimate mixture furthermore improves the development of strengths and the durability of the mortars and concretes.

For the purpose of better understanding the reaction mechanisms, as well as the activity of the glass and its readiness to form a gel, a table of the chemical composition of glass powder and the mechanism by which glass broken down to grain sizes less than 28 $\mu$, p50, and especially those comprised between 0.1 and 10 $\mu$. in the 50th percentile, react quickly with the hydroxides present in solution, releasing silica, sodium and calcium, which will be organized to give rise to a gel, are set forth, this formation of gel and crystallization cause the appearance of mechanical strengths, nevertheless, without being exclusive and the formation of this gel and its viewing in an electron microscope having been checked by the laboratory, two work mechanisms are to be formulated for how Portland clinker and its components act at very small grain sizes, with the sodocalcic glass mechanically alloyed, intimately mixed and in the presence of water.

MECHANISM 1. It is believed that during the first phase in the course of which the dissolution kinetics are very fast but short, there is an attack by OH- ions on the small glass grains adhered on thicker grains and on highly altered grains. This attack causes, at the same time, the formation of a gel around the grains which, little by little, considerably prevents or limits the exchanges in the solution. The presence of this gel (gels observed in SEM in the laboratory) explains the slowing down of the dissolution rate occurring throughout the second phase.

Two different hypotheses are considered at this level:

Hypothesis 1: The gel breaks due to considerable internal stresses (as in the case of alkaline reactions), caused by the circulation of the solution in contact with the glass grains and the considerable dissolutions can explain the abrupt increase of concentrations in the third phase.

Hypothesis 2: the fact of the intense stresses, the already embrittled grains can be fragmented, giving rise to intensely reactive surfaces which may explain the considerable increase of concentrations of silica and sodium of the third phase.

MECHANISM 2. The release of elements with different rates according to the phases is also considered. Throughout the first phase, the elements of the surfaces which are highly disturbed due to the grinding pass into the solution much more quickly than finer powder and although the temperature of the solution is higher. The dissolution then slows down because the layers in contact are denser and have fewer structural defects, which can explain at the same time that the release of the silica disorders the silicate tetrahedrons, causing an increasing disorder of the architecture of the silicates and the appearance of gels. Apart from a certain degree of decohesion, the chemical changes speed up, releasing the elements more easily, and this can explain the abrupt increase of the concentrations of silica and sodium. In parallel, this release disorders more and more the structure of the silicate, which tends progressively to a gel structure.

Composition of the Glass

| Elements | Mass percentage |
|---|---|
| $SiO_2$ | 70.00 |
| $Na_2O$ | 10   11.30 |
| $K_2O$ | 0.60 |
| CaO | 10.70 |
| MgO | 1.40 |
| MnO | 0.10 |
| $Al_2O_3$ | 15   2.20 |
| $Fe_2O_3$ | 1.60 |
| $TiO_2$ | 0.07 |
| $P_2O_5$ | 0.05 |
| PF | 0.90 |

| Elements | Mass concentration (in mg/kg) |
|---|---|
| Ag | <0.2 |
| As | <20.0 |
| B | 101.0 |
| Ba | 414.0 |
| Be | <2.0 |

| Elements | Mass concentration (in mg/kg) |
|---|---|
| Bi | <10.0 |
| Cd | <2.0 |
| Ce | 11.0 |
| Co | 14.0 |
| Cr | 843.0 |
| Cu | 54.0 |
| La | <20.0 |
| Li | 44.0 |
| Mo | 6.0 |
| Nb | <20.0 |
| Ni | 15.0 |
| Pb | 804.0 |
| Sb | <10.0 |
| Sn | 30.0 |
| Sr | 105.0 |
| V | 10.0 |
| W | <10.0 |
| Y | <20.0 |
| Zn | 81.0 |
| Zr | 114.0 |

Among the properties which can be attributed to additions or glass cements is the property relating to the pozzolanic quality thereof, which consists of a series of reactions occurring during the setting and hardening step. Test of Alloying of Clinker + gypsum + at 70%, plus sodocalcic glass at 30% by weight.

| Determinations conducted | AGE OF THE TEST (days) | | | | |
|---|---|---|---|---|---|
| | 8 (Point A) | 15 (Point B) | 28 (Point C) | 90 (Point D) | 365 (Point E) |
| mmol (OH) / liter: | 62.9 | 66.0 | 70.4 | 79.8 | 79.9 |
| mmol (CaO) / liter: | 0.5 | 0.5 | 0.5 | 0.4 | 0.3 |
| Pozzolanicity character: | Pozzolanic | Pozzolanic | Pozzolanic | Pozzolanic | Pozzolanic |

The mechanical alloying of the clinker + gypsum + glass contributes to the increase of the mechanical strengths and the durability beyond those which would be reached without the mechanical alloying. The concretes formed with this cement of alloyed glass has an excellent resistance to chemical etching against acidic and selenitous water but early compression strengths are usually slightly lower with respect to pure Portland cement, after 90 consecutive days, these differences disappear. If alumina is added, the initial strengths are equaled.

Another property of this cement, of alloyed clinker and glass is that of being more resistant to sulfates, which is a consequence of the reaction of the silica of the glass with the aluminates of the clinker upon enabling the solubility of the latter additionally, these products contribute to a higher impermeability of the concrete and have a more stable behavior to the reaction with the alkalis of the cement, transforming it with an inhibitor of the alkali-aggregate reaction.

The activity of the glass cement is shown when a material is obtained with a series of advantages over pure Portland cements, such as:

* Increase of the mechanical properties, especially at mid- and long-term
* More resistance to sulfate attack
* More resistance to the alkali-silica reaction
* More pore refining
* More impermeability
* Decrease of the corrosion of the reinforcements
* Decrease of the heat of hydration

In relation to the mechanical properties, the alloy of glass with clinker + gypsum applied to the production of mortars or concretes causes phase changes and microstructural transformations acting on the physical and chemical properties of the material.

In the reaction of the clinker with the glass, the OH-ions produced in the hydration of the clinker are deposited in the pores of the concrete and upon coming into contact with the amorphous silica of the glass, an extra gel of hydrated calcium silicate is formed and the calcium hydroxide is reduced, conferring considerable advantages to the mixtures such as the increase of their mechanical strengths and the decrease of porosity, due to the so-called microfilling effect.

The sodocalcic glass has a considerable activity with a chemical composition and a $SiO_2$ content greater than 70% and a $Na_2O$ content greater than 10% and micronized between 0.1-28 microns, whereby a high alkalinity and therefore activity are ensured.

The glass present in the resulting cement cause a significant decrease of permeability of the concrete, which reduces the mobility of the aggressive agents through the matrix. The reduction of the permeability is due to the second reaction of hydrated calcium silicate, product of the reaction of the glass with the addition with the free CH of the hydration reaction, which chemically binds the alkalis of the cement, preventing their reaction, and they do not show any type of long-term expansion.

Development of the General Properties

By means of the joint grinding in a ball mill (preferably of alumina, due to the non-inclusion of contaminating elements) of domestic sodocalcic glass, virtually all glasses of common use, even sheet glass from the protective glazing in buildings and houses, can be used in any proportion by weight of the different colors used, adding white Portland clinker, gypsum and possibly alumina to the mill.

The joint grinding in proportions ranging from:

| White clinker | Mixed glass |
| --- | --- |
| 20-25 clinker to | 75-80 of mixed glass |
| 75-80 clinker to | 20-25 of mixed glass |

Based on the fact that the color mixed glass micronized to less than 40 $\mu$. in any percentage its absolute whiteness coefficient L is always greater than 85 according to the CIELAB space.

And with the evidence that as the fineness thereof increases, the coefficient L increases, thus in 10 mixtures with different colors and proportions of the latter at 18 $\mu$ an average L of 86.5 has been obtained, a* and b* varying according to the different proportions of color or red and yellow hues. Likewise, white clinker has been ground to 18 $\mu$ with the following composition:

|  | White Clinker |
|---|---|
| $SiO_2$ | 23.87 |
| $Al_2O_3$ | 3.09 |
| $F_2O_3$ | 0.21 |
| CaO | 67.63 |
| MgO | 0.37 |
| $SO_3$ | 2.5 |
| $K_2O$ | 1.27 |
| $P_2O_5$ | ---- |
| Free lime | 1.69 |
| Chromium 6 | 0.25 ppm |

The following result has been obtained by applying the CIELAB space.

```
50% (White clinker + Gypsum)      L       a*       b*
                                 91.5    -1.2      5.1

50% (Color mixed glass)           L       a*       b*
                                 86.5
```

Average value of the intimate mixture (50/50)

$$L = \frac{86.5 + 91.5}{2} = 89.00$$

Mechanical alloying between glass + white clinker (50/50)

```
L = 91.5          a* = -1.2          b* = 5.1
```

The mechanical alloying between both has increased L by + 2.5, 2.73 %

Test carried out with mechanical alloying at 18$\mu$. and the following proportions:

|  |  | L | a* | b* |
|---|---|---|---|---|
| clinker + gypsum/color mixed glass | 50/50 | 91.5 | -1.2 | 5.1 |
| clinker + gypsum/color mixed glass | 60/40 | 91.9 | -1.2 | 4.8 |
| clinker + gypsum/color mixed glass | 70/30 | 92.4 | -1 | 4.2 |
| clinker + gypsum/color mixed glass | 80/20 | 92.7 | -1 | 3.7 |
| clinker + gypsum/color mixed glass | 90/10 | 93.3 | -0.8 | 3 |

This same test with the same parameters has been carried out using the same clinker + gypsum at 18 $\mu$. and transparent sodocalcic glass.

The results of clinker + gypsum were

$$L = 91.5 \qquad a* = -1.2 \qquad b* = 5.1$$

The results of 18 μ transparent glass were

$$L = 93.3 \qquad a* = 0.5 \qquad b* = 1.6$$

Average of the mixture

$$L = \frac{91.5 + 93.3}{2} = 92.4$$

Therefore, the mechanical alloying between both provides a result of 50/50 L = 94.8, the luminosity likewise increasing by + 2,40.

Tests of different proportions between transparent glass + white clinker + gypsum, mechanically alloyed, 18 μ..

|  |  | L | a* | b* |
|---|---|---|---|---|
| clinker + gypsum/transparent glass | 50/50 | 94.8 | -0.6 | 2 |
| clinker + gypsum/transparent glass | 60/40 | 93.9 | -0.7 | 2.1 |
| clinker + gypsum/transparent glass | 70/30 | 93.9 | -0.7 | 2.2 |
| clinker + gypsum/transparent glass | 80/20 | 93.8 | -0.7 | 2.3 |
| clinker + gypsum/transparent glass | 90/10 | 93.9 | -0.7 | 2.3 |
| clinker + gypsum/transparent glass | 40/60 | 94.46 |  |  |
| clinker + gypsum/transparent glass | 30/70 | 94.62 |  |  |
| clinker + gypsum/transparent glass | 20/80 | 94.78 |  |  |

The reason which can be deduced for this luminosity increase to occur is the substitution of part of the clinker, since in white Portland clinker there are clusters of ferric oxide in crystalline state, even in the interstices of crystal lattices of basic minerals forming this clinker, which are released in the grinding, this oxide worsens the whiteness of the aggregate, this substituted clinker both in the color glass mixture and, of course, in the transparent glass, has insignificant amounts of iron.

Another cause is the reduction in the percentage of free lime existing in the clinker when part of this clinker is substituted percentage-wise with sodocalcic glass and finally, the uniformity and homogeneity of the resulting powder and the smaller size increases the theoretical surface of the particles and therefore the luminosity.

The glass does not have free lime therefore:

This substitution of the mentioned clinker with glass decreases, according to the percentage, the free lime existing in the clinker, therefore the decrease of the efflorescences occurring in prefabricated elements and large areas with white cement is considerable and such efflorescences disappear with percentages greater than 30% of contribution of glass to the mixture, therefore the new amount of water necessary for the mixture of this cement, also according to the percentage of glass used, is also considered for this decrease of the efflorescences.

Other Properties

A property which determines to a great extent the features and applications of this alloy is the low heat of hydration which this hydraulic cement has.

The heat of hydration by UNE 80118:1986EX semi-adiabatic calorimetry is set forth as an example.

Alloyed mixture of gray Portland clinker + gypsum at 30% by weight of the total mass together with mixed sodocalcic glass at 70%, all at 18 μ.

| 12 hours | 48.7 | cal/g. |
|---|---|---|
| 1 day | 62.9 | cal/g. |
| 3 days | 66.3 | cal/g. |
| 5 days | 67.2 | cal/g. |

Alloyed mixture of clinker + 40% gypsum 60% glass by weight, at 18 um.

| 12 hours | 78 | cal/g. |
|---|---|---|
| 1 day | 86 | cal/g. |
| 3 days | 86.7 | cal/g. |
| 5 days | 86.2 | cal/g. |

Likewise, the expansion in water at 90 days according to UNE 196-1:1996 of an 18 μ. mechanical alloy or 70% sodocalcic glass, 30% clinker plus gypsum has been determined.

The measured value of the expansion of the three test pieces at 7 days, 14 days, 28 days, 60 days and 90 days has been:

| 7 days | 14 days | 28 days | 90 days |
|---|---|---|---|
| 0.0012 | 0.015 | 0.015 | -0.959 |

It is observed that this expansion is almost nil, being negative at 90 days.

This expansion is a consequence of the low heat of hydration and the decrease of the free lime and is a greater advantage if it is compared with ... type Portland cement.

In order to be consolidated in the pozzolanicity of this alloy, tests of this resulting cement with mortar have been carried out.

1) For 70% mixed sodocalcic glass + 30% gray clinker + gypsum at 18 μ
2) For 60% mixed sodocalcic glass + 40% gray clinker + gypsum at 18 μ
3) For 30% mixed sodocalcic glass + 70% gray clinker + gypsum at 18 μ

Thus, in cases 1) and 2), the pozzolanicty is maintained for more than 365 days, reaching 700 days in the tests.

In case 3), at eight days the mixture is not pozzolanic but after this period it remains pozzolanic in the first tests up to 365 days, continuing after two years.

All the described properties can be reached with a much higher price, taking into account the large margin handled by cement industries, using Cem. 42.5.R 42.5.N, 52.5.R and 52.5.N, mechanically alloying it with sodocalcic glass, until achieving grain size between 0.1-28 μ., preferably between 10-18 μ and the optimally between 0.1-10 μ., by adding alumina to it in amounts less than 0.4% by weight of the mixture.

After a study of the mechanical properties, of the possible resulting mixtures, and their corresponding strength tests, these results haven been compared with the mechanical specifications of the cements according to the UNE 2002 Spanish standard for cements, attached in the following table:

**Table 1**

| Reference | standards | Cements | Strength classes | Compression strength (N/mm2-MPa-)At | | | | | | | | | Test standards |
|---|---|---|---|---|---|---|---|---|---|---|---|---|---|
| | | | | Hours | | | Days | | | | | | |
| | | | | | | | | | | 28, | | 90 | |
| | | | | 1 | 3 | 6 | 1 | 2 | 3 | Min | Max. | | |

Mechanical specifications of the cements

| Reference | standards | Cements | Strength classes | 1 (Hours) | 3 (Hours) | 6 (Hours) | 1 (Days) | 2 (Days) | 3 (Days) | 28 Min | 28 Max. | 90 | Test standards |
|---|---|---|---|---|---|---|---|---|---|---|---|---|---|
| 1 | UNE-Bn 197-1: 2000<br>UNE20303-1: 2001<br>UNE20303-2: 2001<br>UNE2030303: 2001 | All | 32.5N | - | - | - | - | - | ≥ 16.0 | ≥ 32.5 | ≤ 52.5 | - | UNE-EN 196-1 |
| | | | 32.5R | - | - | - | - | ≥ 10.0 | - | ≥ 32.5 | ≤ 52.5 | - | |
| | | | 42.5N | - | - | - | - | ≥ 10.0 | - | ≥ 42.5 | ≤ 62.5 | - | |
| | | | 42.5R | - | - | - | - | ≥ 20.0 | - | | - | - | |
| | | | 52.5N | - | - | - | - | ≥ 20.0 | - | ≥ 52.5 | - | - | |
| | | | 52.5R | - | - | - | - | ≥ 30.0 | - | ≥ 52.5 | - | - | |
| 2 | UNE80305:2001 | BL 22.5X | 22.5N | - | - | - | - | - | ≥ 10.0 | ≥ 22.5 | ≤ 42.5 | - | As in 6 UNEBN |
| | | The rest | As in 1 | - | - | - | - | - | | | | - | As in 1 80117:2001 |
| 3 | UNE80307:2001 | ESP VI-1 | 22.5N | - | - | - | - | - | - | ≥ 12.5 | ≤ 32.5 | ≥22.5 | UNE-EN 196-1 |
| | | | 32.5N | - | - | - | - | - | - | ≥22.5 | ≤ 42.5 | ≤ 32.5 | |
| | | | 42.5N | - | - | - | - | - | - | ≤ 32.5 | ≤ 52.5 | ≤ 42.5 | |
| 4 | UNE80309:2001 | ONR4 | 4 | 0.5 | 0.8 | 1.0 | 1.2 | - | 20. | 4.0 | - | - | UNE80116 |
| | | ONR8 | 8 | 1 | 1.5 | 2.0 | 2.5 | - | 5.2 | 8.0 | - | - | |
| | | ONL8 | 8 | - | 0.4 | 0.8 | 2.0 | - | 5.0 | 8.0 | - | - | |
| 5 | UNE80310:1996 | CAO/R | | - | - | - | ≥ 20.0 | ≥ 40.0 | - | - | - | - | UNEBN 196-1 |

(continued)

| Reference | standards | Cements | Strength classes | Compression strength (N/mm2-MPa-)At | | | | | | | | | Test standards |
|---|---|---|---|---|---|---|---|---|---|---|---|---|---|
| | | | | Hours | | | Days | | | | | | |
| | | | | | | | | | | 28, | | 90 | |
| Mechanical specifications of the cements | | | | 1 | 3 | 6 | 1 | 2 | 3 | Min | Max. | | |
| 6 | ENV 413-1:1994 MC12.5<br><br>UNS-BNV 413-1: 1995 | MC5 | 5 | - | - | - | - | - | - | ≥ 5.0 | ≤ 15.0 | - | UNEBN 196-1 |
| | | MC12.5 | 12.5 | - | - | - | - | - | ≥ 7.0 | ≥ 12.5 | ≤ 32.5 | - | |
| | | MC12.5X | 12.5 | - | - | - | - | - | | | | - | |
| | | MC22.5X | 22.5 | - | - | - | - | - | ≥ 10.0 | ≥ 22.5 | ≤ 42.5 | - | |

Upon verifying the results obtained with the previous table, the following table is obtained, in which the ratio of glass/clinker plus gypsum, in the different proportions is combined with the determinations of these tests at the age of 28 days and it can be stated that the UNE 2002 standard relating to mechanical strengths is complied with in the different proportions of the mixtures, which standard is attached in the following table:

**Table 2**

| MECHANICAL STRENGTHS ACCORDING TO UNE 2002 STANDARDS | | | | | | | | | | | |
|---|---|---|---|---|---|---|---|---|---|---|---|
| References | Standards | Cerments | Strength classes | Different types of cement according to percentage | | | | | | | Test standards |
| | | | | glass<br>clinker + gypsum | | | | | | | |
| | | | | 80/20 | 70/30 | 60/40 | 50/50 | 40/60 | 30/70 | 20/80 | |
| 1 | UNE-BN 197-1:2000<br>UNE 80303-1:2001<br>UNE 80303-2:2001<br>UNE 80303-3:2001 | All | 32.5 N<br>32.5 R<br>42.5 N<br>42.5 R<br>52.5 N<br>52.5 R | | | X | X | X<br>X | X<br>X<br>X<br>x | X<br>X<br>X<br>X<br>X<br>x | UNE-EN 196-1 |
| 2 | UNE 80303:2001 | BL 22.5X | 22.5 N | | | X | | | | | As in 6 UNE EN |
| | | The rest | As in 1 | | | | | | | | As in 1 80117:2001 |
| 3 | UNE 80307:2001 | ESp VI-1 | 22.5 N | | | | | | | | UNE-EN 196-1 |
| | | | 32.5 N | | | | | | | | |
| | | | 42.5 N | | | | | | | | |
| 4 | UNE 80309:1994 | CNR 4 | 4 | | | | | | | | UNE 80116 |
| | | CNR 8 | 8 | | | | | | | | |
| | | CNR 8 | 8 | | | | | | | | |
| 5 | UNE 80310:1996 | CAC/R | - | | | | | | | | UNE-EN 196-1 |
| 6 | ENV 413-1:1994<br>UNE-ENV 413-1:1995 | MC5 | 5 | X | X | | | | | | UNE-EN 196-3 |
| | | MC12.5 | 12.5 | X | X | | | | | | |
| | | MC12.5 X | 12.5 | X | X | | | | | | |
| | | MC 22.5 X | 22.5 | | | | | | | | |

**Claims**

1. A hydraulic binder, comprising:

    - pure Portland clinker,
    - gypsum,
    - sodocalcic glass, color mixed glass, or transparent sodocalcic glass, and optionally
    - alumina for increasing the initial strengths of the compound, for the purpose of forming a high-performance, low-cost, sustainable hydraulic cement.

2. The hydraulic binder according to claim 1, **characterized in that** the typical composition of the Portland clinker used is the following:

    - 40-50% SC3 Tricalcium Silicate
    - 20-30% SC2 Dicalcium Silicate
    - 10-15% AC3 Tricalcium Aluminate
    - 5-10% AFE4 Tetracalcium Aluminoferrite
    - for the white Portland clinker the percentage of F203 in a proportion not greater than 0.4%

3. The hydraulic binder according to claim 1, **characterized in that** the contribution of the two basic components ranges from a maximum of 75 to 80% of clinker, gypsum and alumina, if this component is included, to a minimum of 20% and in a complementary manner a maximum of 80% of sodocalcic glass to a minimum of 20% of the same glass, plus water.

4. The hydraulic binder according to claim 1, **characterized in that** the maximum contribution of gypsum is 4% and that of alumina is 0.5% of the percentage of Portland clinker.

5. The hydraulic binder according to claim 1, **characterized in that** the product obtained has a pH greater than 12, in any of the aforementioned mixtures.

6. The hydraulic binder according to claim 1, **characterized in that** the product resulting from the mechanical alloying has a grain size comprised between 0.1 $\mu$ - 28 $\mu$., p50, preferably 10 and 18 $\mu$., p50 and optimally between 0.1 and 10, p50.

7. The hydraulic binder according to claim 1, **characterized in that** the product resulting from the mechanical alloying, in which sodocalcic glass is incorporated in any color proportion together with white Portland clinker plus gypsum in proportions ranging from a maximum of 75 to 80% of clinker, gypsum and alumina, to a minimum of 20% and in a complementary manner a maximum of 80% of sodocalcic glass to a minimum of 20% of the same glass, has in any of these proportions a luminosity L according to the CIELAB scale greater than 85.

8. The hydraulic binder according to claim 7, **characterized in that** the product resulting from the mechanical alloying, in which transparent sodocalcic glass is incorporated together with white Portland clinker plus gypsum in proportions ranging from a maximum of 75 to 80% of clinker, gypsum and alumina, to a minimum of 20% and in a complementary manner a maximum of 80% of sodocalcic glass to a minimum of 20% of the same glass, has in any of these proportions a luminosity L according to the CIELAB scale of at least 85 and at most 97.

9. The hydraulic binder according to claim 1, **characterized in that** product resulting from the mechanical alloying, when sodocalcic glass is incorporated at a minimum of 30% to a maximum of 90%, together with white or gray Portland clinker plus gypsum at 70% to a minimum of 10% by weight, lacks the fluorescences of mortars and concretes.

10. The hydraulic binder according to claims 1 and 3, **characterized in that** the product resulting from the mechanical alloying incorporates sodocalcic glass, together with white or gray Portland cement 42.5.R and 42.5.N, 52.5.R, 52.5.N, ground to grain sizes of 0,1 $\mu$. , to 28 $\mu$., p50, preferably between 10 and 18 $\mu$. and optimally between 0.1 to 10 $\mu$., in the same proportions as those indicated in claim 3, forming a product which likewise complies with the UNE 2002 standards in relation to mechanical strengths and chemical specifications, formulated with the product of the previous claims formed by: clinker + gypsum + sodocalcic glass.

11. A manufacturing method for the hydraulic binder of the previous claims, **characterized in that** it is obtained by mechanical alloying carried out in a high-strength ball mill of alumina or of chromium steel, in dry conditions, of: pure Portland clinker, gypsum and sodocalcic glass, color mixed glass, or transparent sodocalcic glass, even alumina.